# FASCICULE DE BREVET EUROPEEN

(11) **EP 4 374 465 B1**
(45) Date de publication et mention de la délivrance du brevet: **09.04.2025**
(21) Numéro de dépôt: 22737646.4
(22) Date de dépôt: 09.06.2022
(51) Int. Cl.: H01M 50/503, H01M 50/514, H01R 13/20, H01R 13/11, H01R 13/46, H01R 13/506, H01R 13/627, H01R 13/641

(54) **DISPOSITIF DE CONNEXION D'UN CONDUCTEUR ELECTRIQUE À UN CONNECTEUR ÉLECTRIQUE, LE DISPOSITIF ETANT MUNI D'UN TÉMOIN VISUEL DE BON MONTAGE**
VORRICHTUNG ZUM ANSCHLIESSEN EINES ELEKTRISCHEN LEITERS AN EINEN ELEKTRISCHEN VERBINDER, WOBEI DIE VORRICHTUNG MIT EINEM VISUELLEN INDIKATOR FÜR EINE KORREKTE ANORDNUNG AUSGESTATTET IST
DEVICE FOR CONNECTING AN ELECTRICAL CONDUCTOR TO AN ELECTRICAL CONNECTOR, THE DEVICE BEING PROVIDED WITH A VISUAL INDICATOR OF PROPER ASSEMBLY

(30) Priorité: 23.07.2021 FR 2107981
(43) Date de publication de la demande: 29.05.2024
(73) Titulaire: A. Raymond et Cie, 38000 Grenoble (FR)
(72) Inventeur: GARAPON, Yoann, 38000 Grenoble (FR)
(74) Mandataire: IP Trust
(86) Numéro de dépôt international: PCT/FR2022/051097
(87) Numéro de publication internationale: WO 2023/002097

(56) Documents cités:
- EP-A1- 2 830 162
- WO-A1-2021/050499
- US-A1- 2006 094 281
- US-B2- 8 235 292

## Description

### DOMAINE DE L'INVENTION

La présente invention concerne un dispositif de connexion pour électriquement relier un terminal d'un module de batterie à un conducteur électrique. Ce conducteur peut permettre de relier électriquement plusieurs modules entre eux. L'invention trouve une application toute particulière dans le domaine des véhicules électriques.

### ARRIERE PLAN TECHNOLOGIQUE DE L'INVENTION

Dans les systèmes de stockage d'énergie électrique à haute tension, notamment ceux utilisés dans les véhicules électriques, il est habituel de combiner plusieurs cellules de batterie pour former des modules de batterie individuels. Chaque module comprend habituellement deux bornes ou terminaux présentant des pôles différents. Les modules de batterie sont connectés les uns aux autres, c'est-à-dire mis en contact électrique les uns avec les autres, par l'intermédiaire d'un jeu de barre, généralement en cuivre.

De manière usuelle, un jeu de barre est vissé ou soudé aux terminaux des modules qu'il relie, ce qui n'est pas toujours adapté à un fort volume de fabrication
On connait des documents WO2019242917 et US10333117 des dispositifs de connexion assemblant un jeu de barre à un terminal par simple clippage. Toutefois ces dispositifs ne disposent d'aucun moyen pour confirmer l'état de bon verrouillage de la connexion. Il n'est donc pas possible, notamment lors d'une chaine de montage automatique, de détecter facilement si les connexions entre le jeu de barre et les terminaux sont correctement réalisées.

D'autres dispositifs de connexion sont connus des documents EP2830162A1, US2006094281A1, US8235292B2 et WO2021050499A1.

Il est ainsi souhaitable de disposer d'un dispositif de connexion muni d'un témoin visuel de son bon montage.

### OBJET DE L'INVENTION

Un but de l'invention est de proposer un dispositif de connexion d'un connecteur électrique à un terminal simple à utiliser et muni d'un témoin visuel de bon montage.

### BREVE DESCRIPTION DE L'INVENTION

En vue de la réalisation de ce but, l'objet de l'invention propose un dispositif de connexion d'un conducteur électrique à un connecteur électrique. Le dispositif de connexion comprend :
- un boitier définissant un logement interne dans lequel réside le connecteur électrique, le boitier présentant une ouverture pour permettre l'insertion du conducteur électrique dans le logement interne et sa mise en contact avec le connecteur électrique;
- un verrou disposé en partie dans le boitier, le verrou comprenant un premier bras et un deuxième bras, les deux bras comprenant respectivement deux portions supérieures disposées au niveau de l'ouverture et susceptibles de s'écarter l'une de l'autre pour se refermer sur des encoches du conducteur électrique et placer le verrou en configuration de verrouillage dans lequel les portions supérieures du premier bras et du deuxième bras présentent un écartement déterminé;
- un témoin visuel de verrouillage formé d'au moins un motif disposé sur une au moins des portions supérieures des bras du verrou, le témoin visuel de verrouillage étant intègrement exposé uniquement lorsque le verrou est en configuration de verrouillage et que les deux bras présentent l'écartement déterminé.

Selon d'autres caractéristiques avantageuses et non limitatives de l'invention, prises seules ou selon toute combinaison techniquement réalisable :
- le boitier est formé de deux parties pouvant s'assembler l'une à l'autre ;
- le boitier comprend une rainure de guidage des portions supérieures du premier et du deuxième bras ;
- les portions supérieures des premier et deuxième bras sont respectivement associées à des branches flexibles de rappel ;
- le boitier comprend deux compartiments secondaires configurés pour respectivement accueillir les branches flexibles de rappel des premier et deuxième bras ;
- chaque portion supérieure est munie d'une butée d'écartement configurée pour s'insérer dans une encoche du conducteur électrique ;
- chaque portion supérieure des bras comprend également une pièce de contour définissant en combinaison une partie au moins d'un passage permettant d'insérer le conducteur électrique dans l'ouverture ;
- les pièces de contour se chevauchent l'une sur l'autre au niveau d'au moins une zone masquée, lorsque le conducteur électrique n'est pas inséré dans dispositif de connexion ;
- au moins un motif est disposé sur la zone masquée ;
- le dispositif de connexion comprend deux motifs formant en combinaison un code détectable par un dispositif de lecture ;
- le code comprend au moins un marqueur de détection uniquement exposé lorsque le verrou est en configuration de verrouillage ;
- le code est un code QR.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 représente un exemple de deuxième pièce compatible avec un dispositif de connexion conforme à l'invention ;
[Fig. 2] La figure 2 représente une vue d'ensemble d'un dispositif de connexion conforme à l'invention ;
[Fig. 3] La figure 3 représente une vue éclatée d'un dispositif de connexion conforme à l'invention ;
[Fig. 4A]
[Fig. 4B]
[Fig. 4C]

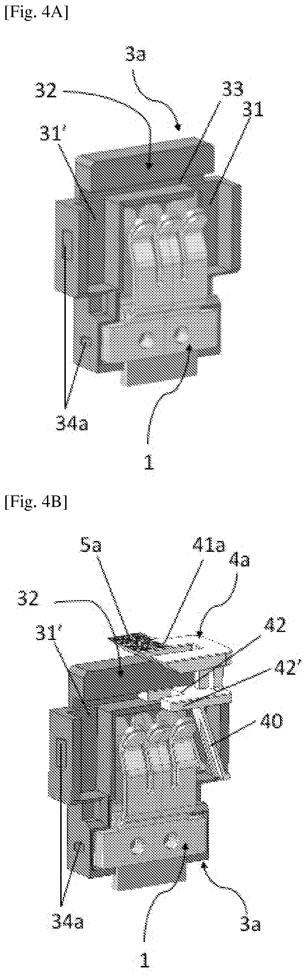

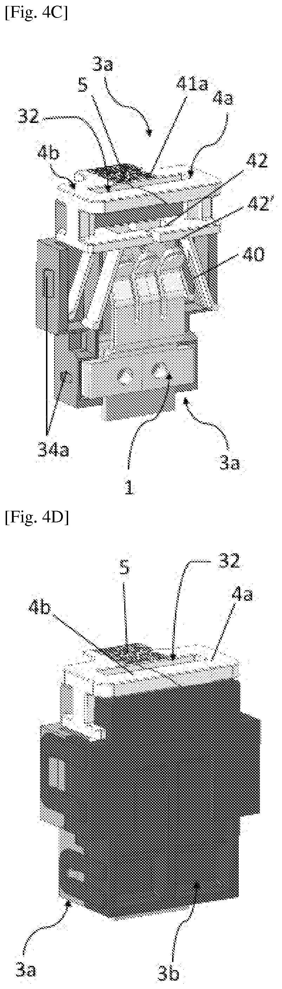

[Fig. 4D] Les figures 4A à 4D représentent les différentes étapes de préassemblage du dispositif de connexion conforme à l'invention.
[Fig. 5A]
[Fig. 5B]
[Fig. 5C]

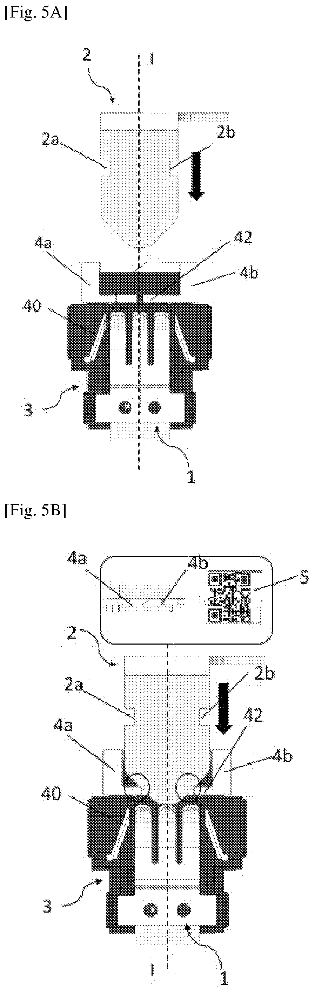

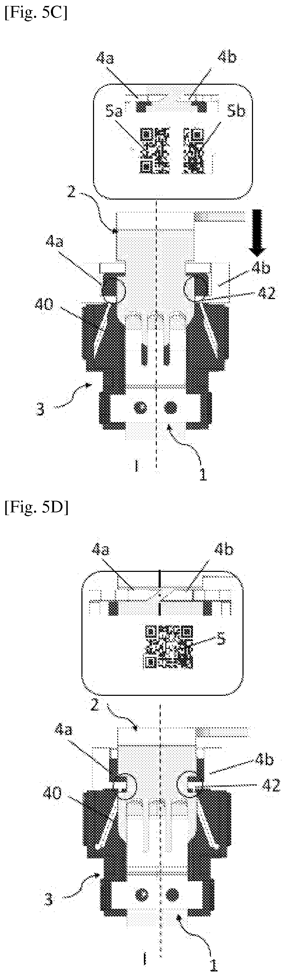

[Fig. 5D] Les figures 5A à 5D représentent, selon une vue en coupe, les différentes étapes d'assemblage d'un connecteur électrique à un terminal via un dispositif de connexion conforme à l'invention, ces figures illustrent également, pour chacune de ces étapes, une vue zoom en coupe au niveau des branches de contact du verrou ainsi qu'une vue de dessus du témoin de verrouillage.

### DESCRIPTION DETAILLEE DE L'INVENTION

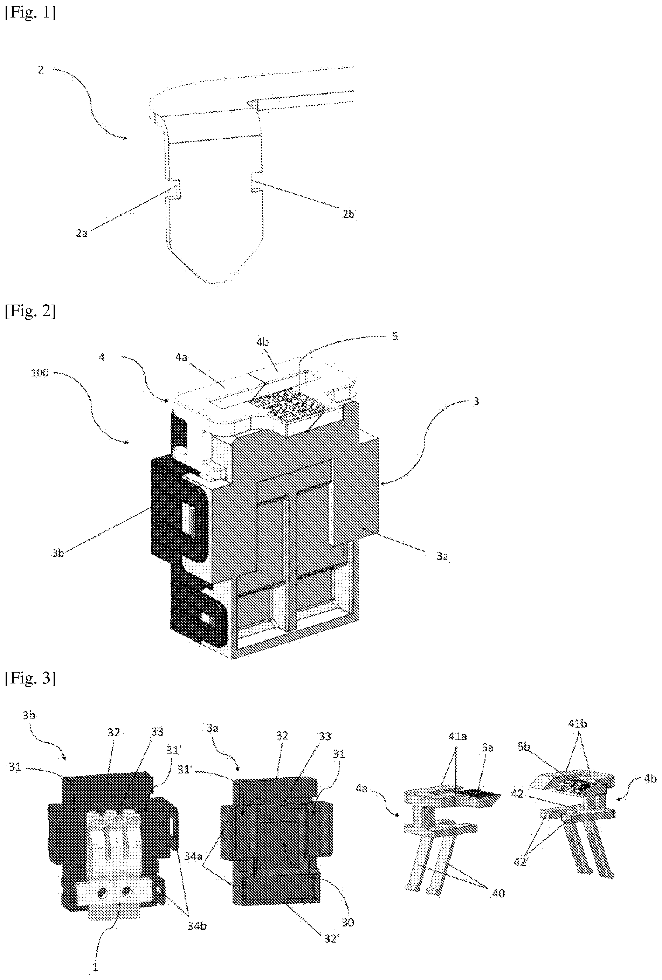

L'objet de la présente description concerne un dispositif de connexion 100 d'un conducteur électrique 2 à un connecteur électrique 1. Le conducteur électrique 2 peut être l'extrémité d'un jeu de barre, et le dispositif de connexion 1 associé à un terminal d'un module de batterie. Comme cela est bien visible sur la figure 1, le conducteur électrique 2 est muni d'une paire d'encoches 2a,2b. Les encoches sont disposées en vis-à-vis l'une de l'autre, de sorte que le conducteur électrique 2 présente, au niveau des encoches, une section de dimension réduite. Le conducteur électrique 2 présente une extrémité chanfreinée pour faciliter son insertion dans le dispositif de connexion 100 et provoquer l'écartement progressif des bras d'un verrou destiné à s'engager dans les encoches 2a, 2b pour verrouiller la connexion, comme cela sera détaillé plus en détail dans la suite de cette description.

### Présentation générale du dispositif de connexion

Les figures 2 et 3 représentent respectivement une vue d'ensemble et une vue éclatée d'un dispositif de connexion 100 selon un mode de mise en œuvre. La figure 2 représente notamment le dispositif de connexion 100 en configuration dite « de livraison ». Le dispositif de connexion 100 est formé d'un boitier 3 définissant un logement interne dans lequel réside la connecteur électrique 1, d'un verrou 4 disposé en partie dans le boitier 3 et d'un témoin visuel de verrouillage 5 porté par le verrou 4.

Dans le mode de mise en œuvre illustré, le connecteur électrique 1 est formé d'une pluralité de paires de lames flexibles (3 paires de lames flexibles sur le connecteur 1 de la figure 1), les lames d'une paire de lames se faisant face. Le connecteur électrique 1 est assemblé au terminal du module de batterie, ici par vissage, et est retenu dans un compartiment de connecteur du logement interne du boitier 3. La connexion électrique entre le conducteur 2 et le connecteur 1 est obtenue en insérant le conducteur 2 dans l'espace défini entre les lames flexibles des paires de lames. Le caractère flexible des lames du connecteur électrique 1 permet de maintenir un contact électrique entre les deux éléments.

Le boitier 3 présente une ouverture 32 débouchant sur le logement interne 30 pour permettre l'insertion du conducteur électrique 2 et son enfichage dans le connecteur électrique 1, c'est-à-dire sa mise en contact électrique avec ce connecteur. Le boitier 3 est avantageusement formé d'un matériau isolant tel qu'une matière plastique.

Le verrou 4 a pour rôle de retenir le conducteur électrique 2 assemblé au boitier 3 et au connecteur électrique 1. Le verrou 4 est formé d'un premier bras 4a et d'un deuxième bras 4b. Chaque bras est constitué d'une portion supérieure associée à deux branches flexibles de rappel 40. Les portions supérieures sont disposées au niveau de l'ouverture 32 du boitier 3. En configuration de livraison, représentée sur la figure 2, les portions supérieures des bras de verrou définissent un passage permettant d'insérer le conducteur électrique 2 dans l'ouverture 32 du boitier 3. Les deux branches flexibles de rappel 40 sont respectivement disposées dans deux compartiments secondaires du logement interne du boitier 3.

Les portions supérieures sont susceptibles de s'écarter l'une de l'autre pour se refermer sur des encoches 2a, 2b du conducteur électrique 2 et placer le verrou 4 en configuration de verrouillage. Dans cette configuration, les portions supérieures du premier bras 4a et du deuxième bras 4b présentent un écartement déterminé.

Le témoin visuel de verrouillage 5 est formé d'au moins un motif 5a,5b disposé sur une au moins une des portions supérieures des bras 4, le témoin étant intègrement exposé uniquement lorsque le verrou est en configuration de verrouillage. En dehors de cette configuration, le témoin de verrouillage 5 peut être masqué, au moins en partie. Avantageusement, et comme cela est représenté sur les figures, le témoin visuel est formé de deux motifs 5a,5b complémentaires respectivement disposés sur les portions supérieures des bras 4a,4b du verrou 4. Ces deux motifs 5a, 5b forment un code visuel, ici un QR code, uniquement interprétable lorsque le verrou 4 est en configuration de verrouillage, c'est-à-dire lorsque les portions supérieures du premier bras 4a et du deuxième bras 4b présentent l'écartement déterminé.

On rappelle qu'un code QR présente une pluralité de marqueurs de détection (3 marqueurs dans la version normalisée de ce code) qui permettent d'identifier rapidement la présence de ce code dans un motif et son orientation. Les marqueurs sont situés aux trois coins du motif et permettent à un scanner de reconnaître le code avec précision.

On dira, dans le cadre de la présente description, que lorsque le dispositif 100 est en configuration de verrouillage, le témoin de verrouillage 5 est « intègre ». Dis autrement, dans cette configuration, les marqueurs de détection sont visibles et disposés relativement les uns vis-à-vis des autres, pour que le code soit détectable par un scanner ou tout autre dispositif de lecture. Il est ainsi possible de détecter automatiquement et de manière fiable l'état de verrouillage de la connexion du dispositif de connexion 100. En dehors de la configuration de verrouillage, les deux motifs 5a, 5b ne peuvent être interprétés. Dans le mode de mis en œuvre représenté, les portions supérieures des bras de verrou se chevauchent en position de livraison, si bien qu'une portion des motifs 5a, 5b portés par ces bras, et notamment un au moins des marqueurs de détection, n'est pas entièrement visible de sorte que la partie exposée des motifs 5a, 5b ne peut être décodée.

Bien entendu le témoin 5 ne correspond pas nécessairement à un code QR. D'une manière plus générale, le ou les motif(s) 5a, 5b qui compose le témoin 5 peuvent correspondre à un code quelconque, tel qu'un code barre unidimensionnel (par exemple, code UPC, code EAN, code 39, code 128, ITF, code 93, codabar, GS1 databar, MSI Plessey, etc. ), un code à barres bidimensionnel (par exemple le code QR pris en exemple, un code datamatrix, PDF417, AZTEC, etc.), un code holographique, un code alphanumérique lisible par l'homme, d'autres codes connus dans l'art et interprétables par un dispositif de lecture équipée d'un dispositif de vision et/ou par un opérateur. Il peut également s'agir d'un simple motif, une couleur, un matériau réfléchissant ou toute autre forme de repère permettant d'être visuellement détecté.

D'une manière très générale donc, le témoin de verrouillage 5 est intègre lorsqu'il peut être reconnu et ainsi indiquer que le dispositif est bien en configuration de verrouillage.

### Description détaillée du dispositif de connexion :

Le boitier 3 est formé d'une première partie 3a et d'une deuxième partie 3b pouvant s'assembler l'une à l'autre, par exemple par clippage. A cet effet, chaque partie est munie d'éléments de fermeture 34a, 34b, ici un système cran 34a/lumière 34b. Convenablement refermé, le boitier 3 définit un logement interne 30 sur lequel débouche une ouverture de boitier 32 à travers laquelle le conducteur électrique 2 est destiné à être inséré. Le boitier 3 comprend également une ouverture secondaire 32' débouchant dans le compartiment de connecteur et permettant d'accueillir le terminal du module de batterie.

La configuration en deux parties du boitier permet de faciliter l'assemblage du connecteur électrique 1 et des bras du verrou 4a,4b pour former le dispositif de connexion 100.

Le boitier 3 comprend également au moins une rainure de guidage 33 dans laquelle s'engagent les portions supérieures des bras du verrou. Dans cette configuration, les portions supérieures peuvent glisser dans la rainure de guidage 33 et s'écarter ou se rapprocher l'une de l'autre. La rainure de guidage est orientée sensiblement perpendiculairement à la direction d'insertion du connecteur électrique 2 dans le boitier. Cette rainure de guidage 33 prévient tout mouvement du verrou 4 autre que celui d'écartement et de rapprochement des portions supérieurs des bras du verrou.

Dans le mode de mise en œuvre représenté, le logement interne comprend deux compartiments secondaires 31,31' configurés pour respectivement accueillir les branches flexibles de rappel 40 des premier et deuxième bras 4a, 4b. Logées dans leurs compartiments secondaires et en appui contre les parois du boitier 3, les branches flexibles de rappel 40 permettent de maintenir les portions supérieures des bras de verrous rapprochés l'un de l'autre, dans la configuration de livraison, en l'absence de tout effort tendant à écarter les deux portions supérieures l'une de l'autre.

Chaque portion supérieure d'un bras 4a,4b du verrou 4 prend la forme d'une mâchoire destinée à se refermer sur les encoches du conducteur électrique. Le fond de la mâchoire forme une butée d'écartement 42 sur lequel l'extrémité du conducteur électrique 2 est susceptible de prendre appui lors de son insertion dans le dispositif de connexion 100. Cet appui provoque l'écartement des portions supérieures des bras 4a,4b lorsque l'insertion du conducteur électrique 2 à travers l'ouverture 32 du boitier 3 est poursuivie pour le connecter au connecteur électrique 1. Le dispositif de connexion 100 est configuré pour que les butées d'écartement 42 s'insèrent dans les encoches 2a,2b du conducteur électrique 2 lorsque l'extrémité de ce conducteur 2 est convenablement insérée dans le connecteur électrique 1 résidant dans le logement du boitier 3. On place de la sorte le verrou 4 en configuration de verrouillage. Dans cette configuration, il est impossible de retirer le conducteur électrique 2 du connecteur 1, sauf à écarter l'une de l'autre manuellement les portions supérieures des bras pour libérer les butées d'écartement 42 des encoches 2a,2b.

Le dispositif de connexion 100 est dimensionné pour imposer un écartement déterminé aux portions supérieures des bras 4a,4b lorsque le verrou 4 est en configuration de verrouillage et ainsi révéler intègrement le témoin de verrouillage 5. Lorsque ce témoin est composé de plusieurs motifs 5a, 5b ceux-ci forment en combinaison un code visuel intègre dans la configuration de verrouillage.

La butée d'écartement 42 portée par un bras de verrou 4a, 4b forme le fond de la mâchoire constituée par deux guides 42' destinés à se loger dans les rainures 33 du boitier 3.

Les portions supérieures des bras 4a,4b comprennent également chacun une pièce de contour 41a,41b, définissant en combinaison une partie au moins du passage permettant d'insérer le conducteur électrique 2 dans l'ouverture 32 du boitier 3. Les pièces de contour 41a, 41b ne sont pas disposées dans le logement du boitier, lorsque les bras 4a, 4b sont convenablement assemblés à ce boitier pour former le dispositif 100, mais entourent l'ouverture. Lorsque le conducteur électrique 2 n'est pas inséré dans dispositif de connexion 100, c'est-à-dire en configuration de livraison de ce dispositif, les pièces de contour 41a,41b se chevauchent l'une l'autre. Une partie d'une des pièces de contour, dite « zone masquée », réside donc sous une autre partie de l'autre pièce de contour. Les pièces de contour 41a,41b, peuvent ainsi présenter des biseaux complémentaires qui se recouvrent au niveau des zones masquées, dans la configuration de livraison comme cela est représenté sur les figures.

Au moins un motif 5a,5b formant le témoin de verrouillage 5 est disposé sur une zone masquée d'une des pièces de contour 41a,41b. De la sorte, en position de livraison, le témoin visuel de verrouillage n'est pas entièrement visible. Lorsque plusieurs motifs 5a, 5b sont présents, ceux-ci forment en combinaison un code visuel intègre dans la configuration de verrouillage uniquement, c'est-à-dire lorsque les portions supérieures du premier bras 4a et du deuxième bras 4b présentent l'écartement déterminé, exposant les zones masquées.

Dans le mode de mis en œuvre représenté, les motifs 5a, 5b forment des portions complémentaires d'un code QR, au moins un marqueur de détection de ce code étant disposé sur une zone masquée des pièces de contour 41a,41b.

### Mise en œuvre du dispositif de connexion

Au cours d'une étape de préassemblage (figures 4A à 4D) du dispositif de connexion 100, les bras 4a,4b du verrou 4 et le dispositif de connexion 1 sont disposés dans le logement interne 30 de la première partie 3a du boitier 3. Plus particulièrement, les branches flexibles de rappel 40 de chaque bras 4a,4b sont respectivement disposées dans un des compartiments secondaires 31,31' et les guides 42' sont placés dans la rainure de guidage 33 (figure 4B et 4C). Puis la deuxième partie du boitier 3 est assemblée par clippage à la première partie 3a, les crans 34b de la deuxième partie venant s'insérer dans les lumières 34a de la première partie 3a (figure 4D).

En l'absence du connecteur électrique 2, les pièces de contour 41a,41b sont maintenus en chevauchement l'une de l'autre grâce à l'effet ressort des branches flexibles de rappel 40. Dans cette configuration de livraison, une portion du motif 5b portée par le deuxième bras 4b est recouverte par le premier bras 4a et la portion visible des motifs 5a,5b ne forme pas un témoin de verrouillage 5 intègre, ici un code QR interprétable.

Dans une étape suivante d'assemblage, le conducteur électrique 2 est inséré selon un axe d'insertion I à travers l'ouverture 32 du boitier 3. L'extrémité chanfreinée du conducteur électrique 2 (voir les zones entourées par un cercle sur les figures 5B à 5D), force progressivement l'écartement des bras 4a,4b du verrou 4 en prenant appui sur les butées d'écartement 42 et s'insère entre les lames flexibles du connecteur 1. Les branches flexibles de rappel 40 se déforment pour permettre l'écartement des portions supérieures des deux bras du verrou 4 (figure 5C).

A l'issue de l'étape d'assemblage, le conducteur électrique 2 est engagé dans le connecteur électrique 1 et les butées d'écartement 42 sont refermées sur les encoches 2a, 2b du conducteur 2. Dans cette configuration de verrouillage, les butées d'écartement 42 imposent un écartement déterminé aux pièces de contour 41a,41b du verrou 4 exposant les motifs 5a,5b pour ce que ces derniers forment un code QR lisible (figure 5D) témoignant de l'état de bon verrouillage de la connexion entre le connecteur électrique 2 et le terminal 1.

Si l'on souhaite déconnecter le conducteur électrique 2 du dispositif de connexion 1, il suffit d'appliquer un effort d'écartement sur les portions supérieures des bras de verrou 4a,4b. On dégage de la sorte les butées d'écartement 42 des encoches 2a, 2b pour libérer le conducteur électrique 2 et permettre son extraction du boitier 3.

Bien entendu l'invention n'est pas limitée au mode de mise en œuvre décrit et on peut y apporter des variantes de réalisation sans sortir du cadre de l'invention tel que défini par les revendications.

## Revendications

1. Dispositif de connexion (100) d'un conducteur électrique (2) à un connecteur électrique (1), le dispositif de connexion (100) comprenant :
- un boitier (3) définissant un logement interne dans lequel réside le connecteur électrique (1), le boitier (3) présentant une ouverture (32) pour permettre l'insertion du conducteur électrique (2) dans le logement interne (30) et sa mise en contact avec le connecteur électrique (1) ;
- un verrou (4) disposé en partie dans le boitier, le verrou comprenant un premier bras (4a) et un deuxième bras (4b), les deux bras (4a,4b) comprenant respectivement deux portions supérieures disposées au niveau de l'ouverture (32) et susceptibles de s'écarter l'une de l'autre pour se refermer sur des encoches (2a,2b) du conducteur électrique (2) et placer le verrou (4) en configuration de verrouillage dans lequel les portions supérieures du premier bras (4a) et du deuxième bras (4b) présentent un écartement déterminé;
- un témoin visuel de verrouillage (5) formé d'au moins un motif (5a,5b) disposé sur une au moins des portions supérieures des bras (4a,4b) du verrou (4), le témoin visuel de verrouillage (5) étant intègrement exposé uniquement lorsque le verrou est en configuration de verrouillage et que les deux bras présentent l'écartement déterminé.

2. Dispositif de connexion (100) selon la revendication précédente dans lequel le boitier (3) est formé de deux parties (3a,3b) pouvant s'assembler l'une à l'autre.

3. Dispositif de connexion (100) selon l'une des revendications précédentes dans lequel le boitier (3) comprend une rainure de guidage (33) des portions supérieures du premier et du deuxième bras (4a, 4b).

4. Dispositif de connexion (100) selon l'une des revendications précédentes dans lequel les portions supérieures des premier et deuxième bras (4a, 4b) sont respectivement associées à des branches flexibles de rappel (40).

5. Dispositif de connexion (100) selon la revendication précédente dans le lequel le boitier (3) comprend deux compartiments secondaires (31,31') configurés pour respectivement accueillir les branches flexibles de rappel (40) des premier et deuxième bras (4a, 4b).

6. Dispositif de connexion (100) selon l'une des revendications précédentes dans lequel chaque portion supérieure est munie d'une butée d'écartement (42) configurée pour s'insérer dans une encoche (2a,2b) du conducteur électrique (2).

7. Dispositif de connexion (100) selon l'une des revendications précédentes dans lequel chaque portion supérieure des bras (4a,4b) comprend également une pièce de contour (41a,41b), définissant en combinaison une partie au moins d'un passage permettant d'insérer le conducteur électrique (2) dans l'ouverture (32).

8. Dispositif de connexion (100) selon la revendication précédente dans le lequel, lorsque le conducteur électrique (2) n'est pas inséré dans dispositif de connexion (100), les pièces de contour (41a,41b) se chevauchent l'une sur l'autre au niveau d'au moins une zone masquée.

9. Dispositif de connexion (100) selon la revendication précédente dans lequel au moins un motif (5a, 5b) est disposé sur la zone masquée.

10. Dispositif de connexion (100) selon l'une des revendications précédentes comprenant deux motifs (5a, 5b), les deux motifs (5a, 5b) formant en combinaison un code détectable par un dispositif de lecture.

11. Dispositif de connexion (100) selon la revendication précédente dans lequel le code comprend au moins un marqueur de détection uniquement exposé lorsque le verrou est en configuration de verrouillage.

12. Dispositif de connexion (100) selon la revendication précédente dans lequel le code est un code QR.

## Patentansprüche

1. Vorrichtung (100) zum Verbinden eines elektrischen Leiters (2) mit einem elektrischen Verbinder (1), wobei die Verbindungsvorrichtung (100) umfasst:
- ein Gehäuse (3), das ein Innengehäuse definiert, in dem der elektrische Verbinder (1) sich befindet, wobei das Gehäuse (3) eine Öffnung (32) zum Ermöglichen eines Einführens des elektrischen Leiters (2) in das Innengehäuse (30) und Inkontaktbringens mit dem elektrischen Verbinder (1) aufweist;
- eine teilweise in dem Gehäuse angeordnete Verriegelung (4), umfassend einen ersten Arm (4a) und einen zweiten Arm (4b), wobei die zwei Arme (4a, 4b) jeweils zwei obere Abschnitte umfassen, die an der Öffnung (32) angeordnet sind und sich voneinander entfernen können, um sich über Kerben (2a, 2b) des elektrischen Leiters (2) zu schließen und die Verriegelung (4) in eine Verriegelungskonfiguration zu bringen, in der die oberen Abschnitte des ersten Arms (4a) und des zweiten Arms (4b) einen bestimmten Abstand aufweisen;
- einen optischen Verriegelungsindikator (5), der aus mindestens einem Muster (5a, 5b) besteht, das auf mindestens einem der oberen Abschnitte der Arme (4a, 4b) des Schlosses (4) angeordnet ist, wobei der optische Verriegelungsindikator (5) nur dann vollständig offengelegt ist, wenn die Verriegelung sich in der Verriegelungskonfiguration befindet und die zwei Arme den bestimmten Abstand aufweisen.

2. Verbindungsvorrichtung (100) nach dem vorstehenden Anspruch, wobei das Gehäuse (3) aus zwei zusammensetzbaren Teilen (3a, 3b) ausgebildet ist.

3. Verbindungsvorrichtung (100) nach einem der vorstehenden Ansprüche, wobei das Gehäuse (3) eine Nut (33) zum Führen der oberen Abschnitte des ersten und des zweiten Arms (4a, 4b) umfasst.

4. Verbindungsvorrichtung (100) nach einem der vorstehenden Ansprüche, wobei den oberen Abschnitten des ersten und des zweiten Arms (4a, 4b) jeweils flexible Rückführzweige (40) zugeordnet sind.

5. Verbindungsvorrichtung (100) nach dem vorstehenden Anspruch, wobei das Gehäuse (3) zwei sekundäre Fächer (31, 31') umfasst, die konfiguriert sind, um jeweils die flexiblen Rückführzweige (40) des ersten und des zweiten Arms (4a, 4b) aufzunehmen.

6. Verbindungsvorrichtung (100) nach einem der vorstehenden Ansprüche, wobei jeder obere Abschnitt mit einem Abstandsanschlag (42) versehen ist, der konfiguriert ist, um in eine Kerbe (2a, 2b) des elektrischen Leiters (2) eingeführt zu werden.

7. Verbindungsvorrichtung (100) nach einem der vorstehenden Ansprüche, wobei jeder obere Abschnitt der Arme (4a, 4b) auch ein Konturstück (41a, 41b) umfasst, die in Kombination einen Teil mindestens eines Durchgangs definieren, der das Einführen des elektrischen Leiters (2) in die Öffnung (32) ermöglicht.

8. Verbindungsvorrichtung (100) nach dem vorstehenden Anspruch, wobei die Konturstücke (41a, 41b) sich an einem abgedeckten Bereich überlappen, wenn der elektrische Leiter (2) nicht in die Verbindungsvorrichtung (100) eingeführt ist.

9. Verbindungsvorrichtung (100) nach dem vorstehenden Anspruch, wobei an dem abgedeckten Bereich mindestens ein Muster (5a, 5b) angeordnet ist.

10. Verbindungsvorrichtung (100) nach einem der vorstehenden Ansprüche, umfassend zwei Muster (5a, 5b), wobei die zwei Muster (5a, 5b) in Kombination einen durch eine Lesevorrichtung erfassbaren Code ausbilden.

11. Verbindungsvorrichtung (100) nach dem vorstehenden Anspruch, wobei der Code mindestens eine Erfassnungsmarkierung umfasst, die nur sichtbar ist, wenn die Verriegelung sich in der Verriegelungskonfiguration befindet.

12. Verbindungsvorrichtung (100) nach dem vorstehenden Anspruch, wobei der Code ein QR-Code ist.

## Claims

1. Device (100) for connecting an electrical conductor (2) to an electrical connector (1), the connection device (100) comprising:
- a housing (3) defining an internal recess in which the electrical connector (1) is located, the housing (3) having an opening (32) to allow the electrical conductor (2) to be inserted into the internal recess (30) and come into contact with the electrical connector (1);
- a lock (4) arranged in part in the housing, the lock comprising a first arm (4a) and a second arm (4b), the two arms (4a, 4b) respectively comprising two upper portions arranged at the opening (32) and able to be moved away from one another to close on notches (2a, 2b) of the electrical conductor (2) and place the lock (4) in a locking configuration in which the upper portions of the first arm (4a) and the second arm (4b) have a specific separation;
- a visual locking indicator (5) formed by at least one pattern (5a, 5b) arranged on at least one of the upper portions of the arms (4a, 4b) of the lock (4), the visual locking indicator (5) being exposed in integrity only when the lock is in the locking configuration and the two arms have the specific separation.

2. Connection device (100) according to the preceding claim, wherein the housing (3) is formed by two parts (3a, 3b) that can be assembled together.

3. Connection device (100) according to any of the preceding claims, wherein the housing (3) comprises a guide groove (33) for the upper portions of the first and second arm (4a, 4b).

4. Connection device (100) according to any of the preceding claims, wherein the upper portions of the first and second arms (4a, 4b) are respectively associated with flexible return branches (40).

5. Connection device (100) according to the preceding claim, wherein the housing (3) comprises two secondary compartments (31, 31') configured to respectively accommodate the flexible return branches (40) of the first and second arms (4a, 4b).

6. Connection device (100) according to any of the preceding claims, wherein each upper portion is provided with a separation stop (42) configured to fit into a notch (2a, 2b) of the electrical conductor (2).

7. Connection device (100) according to any of the preceding claims, wherein each upper portion of the arms (4a, 4b) also comprises a contour part (41a, 41b) combining to define at least part of a passage allowing the electrical conductor (2) to be inserted into the opening (32).

8. Connection device (100) according to the preceding claim, wherein, when the electrical conductor (2) is not inserted into the connection device (100), the contour parts (41a, 41b) overlap one another at least at one concealed area.

9. Connection device (100) according to the preceding claim, wherein at least one pattern (5a, 5b) is arranged on the concealed area.

10. Connection device (100) according to any of the preceding claims, comprising two patterns (5a, 5b), the two patterns (5a, 5b) combining to form a code detectable by a reading device.

11. Connection device (100) according to the preceding claim, wherein the code comprises at least one detection marker that is only exposed when the lock is in the locking configuration.

12. Connection device (100) according to the preceding claim, wherein the code is a QR code.
